# EUROPEAN PATENT APPLICATION

(11) **EP 2 269 442 A1**
(43) Date of publication of application: **05.01.2011**
(21) Application number: 09828659.4
(22) Date of filing: 12.11.2009
(51) Int. Cl.: A01G 13/02, A01G 17/08

(54) **SYSTEM FOR PROTECTING CROPS FROM THE WEATHER**

(30) Priority: 28.11.2008 ES 200803636
(71) Applicant: Viña Solorca, S.L., 09300 Roa de Duero (Burgos) (ES)
(72) Inventor: BALBÁS ARROYO, Victor, E-09300 Roa de Duero (Burgos) (ES)
(74) Representative: Villamor Muguerza, Jon
(86) International application number: PCT/ES2009/000532
(87) International publication number: WO 2010/061014

(57) **Abstract**

The invention relates to a weather protection system for crops, comprising a series of posts (1) forming rows in correspondence with the rows of the corresponding plantation, establishing at the upper part of each post (1) a roll (8) formed by a sheet rolled on a torsional tube (7) with which tensioning cables (5) are integral, such that the sheet of the roll (8) can be folded at its middle (8') and form two branches or flaps (9 and 10) which are simultaneously rolled and unrolled, such that branches which can be separated are established in the unrolling in order to determine a covering of the corresponding crop or plantation (12), those covering or protection branches (9 and 10) being spread out by means of spreading out the arms (11) of a compass articulated to the actual post (1). Figures 5 and 7.

## Description

### Object of the Invention

The present invention relates to a weather protection system for crops, which has been preferably and specifically designed for intensive row crops, such as fruit trees or vines, and other crops of any type, for the purpose of forming a protection means for preventing or palliating as much as possible the effects of adverse weather in crops which can damage them to a great extent, such as frost, hail, fog and wind.

Furthermore, being able to control the evolution of the fruit independently or not of the external weather conditions, i.e., cause the ripening or delay thereof and the conditions of the latter, depending on what is desired and within limits, is also an object of the invention.

### Background of the Invention

Devices for protecting crops against frost are known, based on a tower formed by a screw arranged at the top of the tower which aspirates the hot air generated by a boiler and projects it on nearby crops, raising the temperature of the surrounding environment.

Likewise, other systems or means for protecting crops against frost are known, based on sprinkler irrigation and consisting of maintaining a mixture of water and ice on the most sensitive parts of the plant, making use of the release of heat when the water goes from liquid at 0°C to solid at the same temperature to compensate the temperature decrease which can affect the vine or the fruit trees. This system requires a total coverage of the entire surface to be protected, and irrigation must be performed at the same time, which involves pipe sections ten times greater than those of a conventional irrigation when it is an anti-frost protection. The mentioned system likewise involves an irrigation network different from the conventional one and quite a larger amount of water.

Protection systems for protecting crops against hail are also known, based on agrotextile nets acting as a barrier against hail, retaining or holding back said hail in a kinetic manner due to the elasticity of the gauze used as a net, such that for an effective protection the nets must be positioned not only horizontally but also vertically for when the hail is accompanied by strong winds.

Protection systems for protecting crops against wind are also known, based on wooden posts, metal and concrete tubes which are fixed to the ground for the crop by means of espaliers, for the purpose of forming the support means for laying a lattice of wires between the posts acting as a support for the branches of the fruit trees, allowing them to climb for a better development, thus preventing damage by strong winds.

In addition, classic greenhouses are the way to best protect crops against adverse weather, which greenhouses protect the crops against frost, hail, dense fog, rain and wind, but in all cases the greenhouse system causes an unnatural growth of the crop, preventing the optimal development of the fruit, which later affects the quality thereof.

In a patent search, invention patent P200703118, corresponding to the same inventor and applicant, which describes an "Integral Weather Protector for Fruit Trees and Vines", was chosen.

Another series of documents can also be mentioned, such as: US2004134122, WO 03007696, ES 2 255 798, US5311699, GB2251777, DE565280, ES 2 157 453, ES 2 015 388, ES 278 637, ES 246 495, ES 441 777 and U0215833, such that all these documents relate in one way or another to protection systems against certain inclemencies of the weather for crops, although in no case does the protection against any atmospheric agent occur simultaneously in any of these documents, and on many occasions they are not even effective for the function for which they have been provided, independently of the complexity of many of them.

### Description of the Invention

The proposed system forms a protective means for crops which furthermore allows controlling the evolution of the fruit, being perfectly provided or being suitable for intensive row crops, since a protective sheet can extend in relation thereto on both sides of the crop and even close the row of the crop, being able to thus create a controlled internal microclimate which will allow defining when and how to ripen the fruit.

The system is furthermore structurally simple, easy to implement, simple to handle and has a high degree of efficiency, making use of the contradictory stresses of a sheet rolled at its middle point in a single central shaft, which upon rotating in one direction or another manually or automatically will roll or unroll both sides or flaps of the sheet at the same time, and therefore folding or spreading out the protection or the closure of the protector.

Therefore, the system of the invention is provided to prevent or palliate as much as possible the effects of adverse weather in crops, which can damage them to a greater or lesser extent, frost, hail, fog, rain and wind being able to be mentioned as adverse weather.

The system of the invention is specifically based on arranging a plurality of posts or struts inserted in the ground and suitably arranged between crops aligned therewith, such that between every two consecutive posts there is arranged a roll containing a preferably textile or plastic covering part or sheet, such that based on rolling/unrolling means, the sheet folded at its middle over a shaft determines two flaps which are superimposed in the rolling thereof to form the roll, whereas in the unrolling the flaps are spread out at the same time, manually or automatically, and can be diverted from one another to form the protector of the row of the crop, i.e., the flaps are in an inclined arrangement from the ridge piece to protect the crop against any atmospheric agent of those mentioned above.

The succession of these rolls supported in the plurality of posts or struts form what has been called the upper ridge piece of the rows of the crops to be protected, these rolls being in turn supported on the shafts themselves which make them rotate in one direction or another, these shafts being able to be formed either by longitudinal spacers between struts, rotating on the head thereof, or simply by the configuration of one or respective cables suitably tensed between the various struts, arranged and rotating on the head thereof, being able to allow by means of the rotation thereof the rolling/unrolling of the entire row at the same time or, if desired, independently.

These longitudinal ridge pieces of the rows are finished at both ends by means of respective tensioners thereof, having tension elements, elements for absorbing expansions and small extensions and elements allowing in turn the free rotation of the ridge pieces.

The mentioned roll can be rolled and unrolled manually or automatically, the rotation thereof in one direction or another being enough for such purpose, with the peculiarity that in its unrolling, and since it is a single sheet with two flaps, it gradually covers and protects both sides simultaneously, one on each side of the ridge piece of the crops, from the start of the latter to the end of the unrolling or the ground, and acting in the same way but in reverse when the operation is a rolling operation.

The mentioned system provides the substantial advantage of being very ecological, given that chemical treatments against botrytis, mildew or other fungi caused by moisture on the leaf or the fruit due to the action of rain, dew, fog, etc., are prevented both in post-processed fruit and in table fruit, preventing the contamination of the soil, subsoil and atmosphere. Likewise, the consumption of fuel for the machinery used is reduced, while at the same time the quality of the fruit is improved since it is untouched by chemical products.

As another essential feature of the invention, it has been provided that each post incorporates a compass, the two arms of which are articulated to an intermediate shaft of the post, the free ends of the compass being retained at the upper part of the post, such that through those free ends of the arms of the compass, when the latter is spread out, it entails the hooking and unrolling of the two flaps of the sheet rolled on the corresponding shaft, being spread out on both sides of the row of the crop to be protected, such that those free ends of the compass, in their downward lowering, are in an inclined arrangement, the flaps of the sheet forming respective inclined surfaces which will reach the ground as a result of the fact that the free ends of the mentioned arms of the compass are spread out until touching the ground.

Those compass arms are associated with a spring tending to open them, therefore they are always pulling on the flaps of the protection sheets, keeping the latter under tension, being at the same time the guiding means for the rolling/unrolling of the actual sheet.

Another novelty feature incorporated in the protection system is the possibility of having espaliers associated with the inner part of each post, and consisting of a series of cables in a horizontal arrangement at different levels and separations serving as a guide and support for the vegetation and evolving at the rate of growth of the vegetation, with the particularity that said espaliers can be associated with the system in an automated manner, being able to be lowered automatically at any time, if the process requires it or if the harvesting requires it.

Finally, it should be stated that the system can be easily modulated and adapted to the investment and needs of each plantation, according to the degree of technology applied in its implementation, its operation being able to be manual or with motors for spreading out the protective mechanisms, or remotely managed; a total protection of the crop against any atmospheric agent being achieved in any case.

### Description of the Drawings

To complement the description which will be made below and for the purpose of aiding to better understand the features of the invention according to a preferred practical embodiment thereof, a set of drawings is attached as an integral part of said description, in which the following has been depicted with an illustrative and non-limiting character:
Figure 1 shows a partial depiction corresponding to an end part of the protection system of the invention in a withdrawn or inoperative situation.
Figure 2 shows an enlarged perspective corresponding to detail A of Figure 1.
Figure 3 shows another enlarged perspective view of detail B of Figure 1.
Figure 4 shows a view of the roll in the rolling/unrolling form of the sheet in which there are established two flaps for forming the actual protection means.
Figure 5 shows a detail of the spreading form of the sheet rolled on the roll shown in Figure 4, in which the two flaps projected in opposite directions and coming from the intermediate folding of the actual protection sheet can be seen.
Figure 6 shows a schematic elevational view of one of the posts with the system of espaliers and the roll located at its upper part.
Figure 7 finally shows a detail of the spreading out of the compass forming part of the system of the invention, spreading out the two flaps of the sheet depicted in the previous figure, determining the protection means of the crop, as can be seen in said figure.

### Preferred Embodiment of the Invention

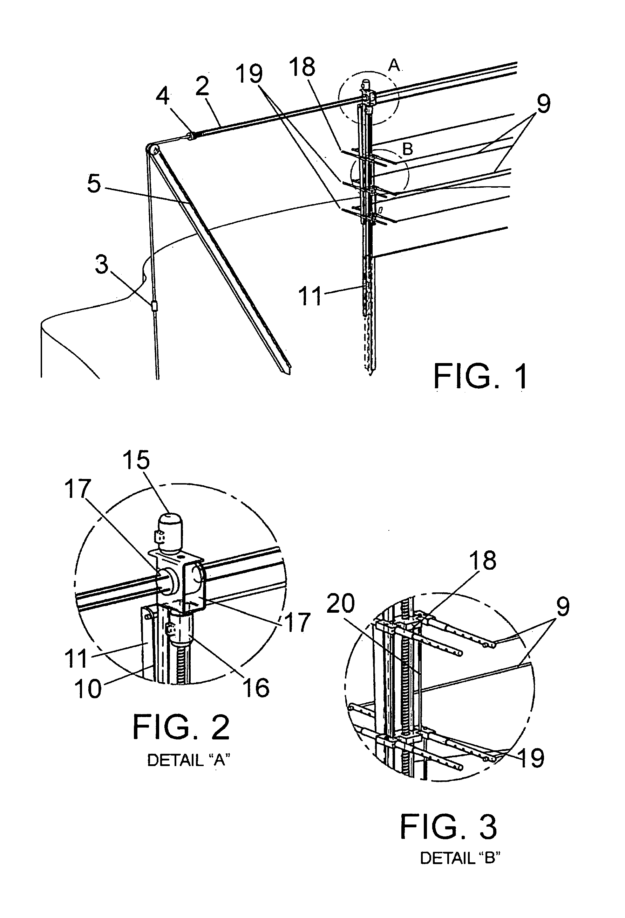

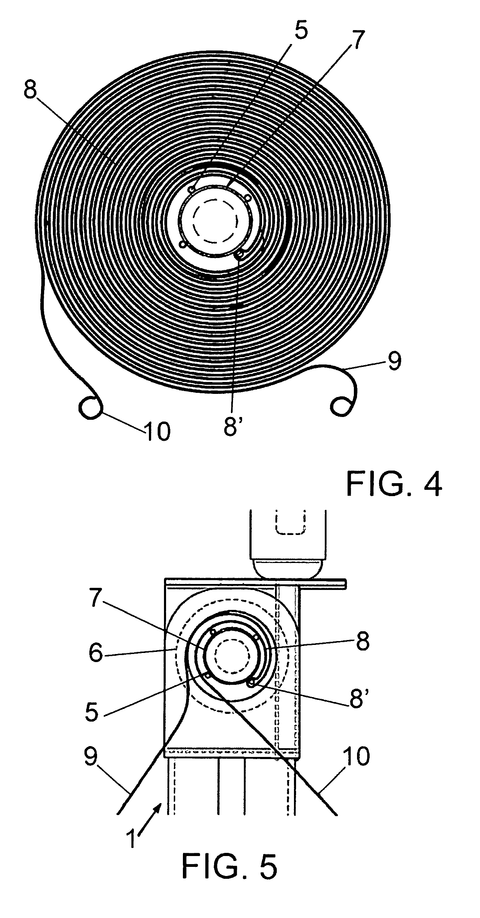

As can be seen in the mentioned figures, the system of the invention comprises a series of posts (1) associated with anchoring elements (2) for the anchoring on the ground and arranged at regular intervals in a row of a plantation which is to be protected, with the particularity that the end and start of the row of posts (1) include an inclined tensioning post (1'), as can be clearly seen in Figure 1, such that said end and tensioning posts (1'), in combination with a tensioner (3) and tension and free rotation springs (4), maintain the constant tension of the entire assembly of aligned cables forming the row system, and the cables of which correspond to the so-called tensioning cables (5) traversing the entire row and tensed in a constant manner, reducing the sag between openings to the minimum between posts (1), such that those tensioning cables (5) are formed, in each case, by a certain number of cables which in turn traverse rotors (6), centrally or concentrically therewith, as depicted in detail in Figure 2, such that the rotor (6) in each case is responsible for making the cables (5) and at the same time a torsional tube (7) rotate, as can be seen in Figure 4, such that the roll (8) is assembled around that torsional tube (7), which roll is formed by the rolling of a sheet with an intermediate folding (8') on one of the cables (5), two sections or flaps (9 and 10) being determined in that sheet forming the roll (8) which can be seen in Figure 4, such that the unrolling, by the rotation of the torsional tube (7) and therefore by the rotation of the cable (5) which is integral, together with the remaining cables, with that torsional tube (7), entails the rolling/unrolling of the mentioned sheet, such that in the unrolling the two mentioned sheets (9 and 10) which will form the protection means of the crop or plantation of each row are extended, as will be set forth below.

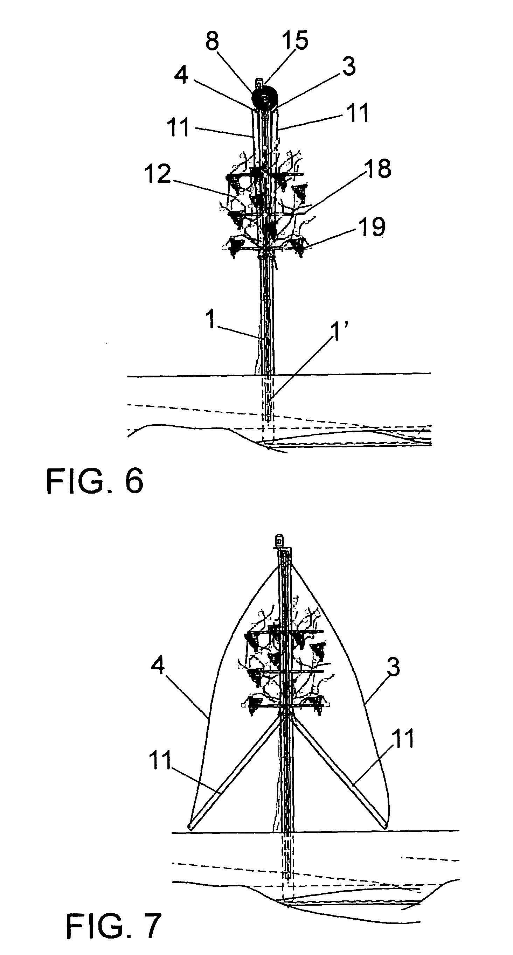

The torsional tube (7) limits and prevents the torsion of the cables (5), since the latter are fixed thereon, one or several cables receiving in turn the middle fold line (8') of the sheet forming the roll (8), although logically the two flaps (9 and 10) established by that intermediate fold (8') can be determined by respective independent sheets rolled in a superimposed manner, which are simultaneously rolled and unrolled by the rotation of the torsional tube (7) with which the cables (5) are integral, all of this such that a single roll (8) is obtained which will cover the vegetation on both sides simultaneously, as can be seen in Figure 7, the upper ridge piece being closed to thus generate a greenhouse, such that if the greenhouse function is not desired, it is enough for the branches or flaps (9 and 10) to have holes.

The branches or flaps (9 and 10) are unrolled by means of spreading out the arms (11) corresponding to a compass, which arms are articulated at an intermediate height of the posts (1) and with the free ends (11') thereof in a raised position when these arms (11) of the compass are folded, the edges of the flaps or branches (9 and 10) of the protective sheet being connected to the ends (11') so that in the spreading out or lowering of the vertical position of the arms (11) towards the position tending towards the oblique depicted in Figure 7, the free end of those arms (11') of the compass (11) drives the branches or flaps (9 and 10), spreading them out and establishing a protection of the crop (12).

The arms (11) of the compass are forced to spread out by springs which are not shown in the figures, all of this such that those arms, in their spreading out, reach and touch the ground of the plantation, generating a triangle, as shown in Figure 7, such that if a greater inner amplitude is desired it is enough to place complementary arms so that the closure occurs in a pentagonal, hexagonal, manner etc., instead of in a triangular manner, configuring an inner space according to the needs of the crop.

The roll can be rolled or unrolled manually or automatically, it is enough to make the rotor (6) rotate manually, for example with a crank, or automatically by means of the geared motor (15) established at the upper part.

In relation to the posts (1), they will preferably be formed by means of two U-shaped profiles facing one another to determine therebetween an inner space or gap to allow assembling a system of espaliers, as is depicted clearly in Figure 1, and in more detail in Figure 3, such that a helical shaft (14) is assembled between the two profiles forming each post (1), which shaft can be operated manually or automatically, although in the preferred embodiment shown in the figures it is operated by means of a geared motor (15) which is slid between the profiles of each post (1) and in its rotation drives in both directions the main and driving espalier (16) in a vertical direction, without interfering with any object or mechanism, such that in its forward movement and once the margin allowed to it by a spacer (17) of espaliers is used up, it starts to drive the secondary espaliers (18), driven in their vertical movement, given that the helical shaft (14) goes through them through a wide through hole established therein, as can be clearly seen in the detail of Figure 3.

The mentioned espaliers (16 and 18) receive the wires (19) for the vegetation or crop (12) mentioned above, as can be seen in Figures 6 and 7, such that those wires (19) will be arranged according to the spacing need, being able to differentiate between several crop sections, because they are independent between sections, which very considerably improves the tension of the espaliers, since they do not need so much tension and can be removed for the mechanical harvesting of the fruit.

The system can be complemented with a remote management, since the mechanisms can be operated mechanically from an electronic control unit located in the crop line, working with master control and operating the drive motors (15) of each of the protection mechanisms independently and simultaneously in all the units of the motor-driven integral protector.

This electronic control unit acts as crop manager and is intended for the automation and remote management of the farm for the maintenance of the crop, such that the operation of the mentioned motors (15) occurs actively, i.e., that the electronic control is performed in advance and in real time, supervising the weather through as many probes as necessary and automatically activating the operation, such that it is possible to act before possible damage and not afterwards.

These weather probes are provided in one and the same assembly with a temperature sensor, a relative humidity sensor, a barometer and an anemometer, so that the data recorded by the latter are sent in real time through radio to the electronic control unit (21) which will analyze such data and will estimate at what time, according to its internal program, it is necessary to activate each of the protection mechanisms.

Finally, it should be stated that the mentioned electronic control unit will consist of completely parameterizable and programmable remote management equipment which will act depending on the input data received from the weather probes or on those received from a GSM/radio communications module, acting according to the program on respective operating relays of the aforementioned geared motors, such that with the previous system it is possible to interact on tripping relays of the geared motors in an automated and remote manner from any GSM terminal by means of alphanumerical or numerical radio-paging while at the same time the operation status of the farm and weather data from the probes can be received by the same means, the entire assembly being supplied by a power connection and a converter for its use with any type of available power supply: such as a connection to the mains, autonomous generators, photovoltaic solar energy, etc.

By means of the described system, in addition to the advantages and features that it offers, an automation and degree of protection based on each season of crop development can be achieved, it not being a problem to conserve the fruit at the harvesting time without the fear of it being damaged by unexpected rain or other reasons at any time, even at night, without depending on hired labor and the presence thereof in the fields.

Likewise, this system prolongs the fructification season and therefore the harvesting season, without the fear of early frost, being able to deal with late ripening for the purpose of harvesting the fruit at the suitable time of quality and grade, and even harvesting it with adverse weather conditions, for example rain, it being enough to unroll or cover the protection sheet to its middle point, thus generating a sort of umbrella which will allow and facilitate the harvest.

## Claims

1. A weather protection system for crops, which, being provided for its application in row crops for the protection thereof against any weather agent such as rain, frost, wind, hail, etc., and furthermore allowing controlling the evolution of the fruit, is **characterized in that** it is formed from a plurality of posts (1), suitably anchored to the ground, forming rows in correspondence with the crops to be protected, a rotor (6) to which tensioning cables (5) are connected and a torsional tube (7) with which said tensioning cables (5) are integral having been provided at the upper part of each post (1), on which torsional tube (7) with the tensioning cables (5) integral therewith there is rolled a sheet of protective material forming a roll (8), the sheet being folded at its center (8') over one of the tensioning cables (5), two branches or flaps (9 and 10) forming the rolling, which branches or flaps, in the unrolling, run simultaneously with the possibility of being spread out towards either side, for the purpose of determining a protective means for the row of the crop or plantation (12) to be covered, it having been provided that the pulling and spreading out of the branches (9 and 10) of the protection sheet are performed by means of the hooking on the free ends (11') of the arms (11) corresponding to a compass articulated to an intermediate point of the corresponding post (1), such that in the spread out position of such arms (11) the free ends (11') thereof, and therefore the ends of the sections (9 and 10) of the protection sheet, reach the ground to generate a total or partial coverage of the rows of crops (12), protecting them.

2. The weather protection system for crops according to claim 1, **characterized in that** inclined posts (1') are included in correspondence with the start and the end of the rows, which posts, in combination with a tensioner (3) and a tension and free rotation spring (4), provide the tensioning of the actual tensioning cables (5) and the stiffening of the general structure.

3. The weather protection system for crops according to the previous claims, **characterized in that** the sheet forming the roll (8) and in which the two protection branches or flaps (9 and 10) are established can be formed by two independent parts, each of them corresponding to one of the branches or flaps (9 and 10).

4. The weather protection system for crops according to the previous claims, **characterized in that** the arms (11) of the compass which can be spread out for the extensibility of the protection branches (9 and 10) are fixed to the post (1) through one of their ends, corresponding to the lower end, whereas the upper and free ends (11') in their folded position are placed at the upper part and engaged with the ends of the protection branches or sections (9 and 10), so that in the spreading out of said arms (11) of the compass they drive and spread out the branches or flaps (9 and 10) and determine the protection of the corresponding crop (12).

5. The weather protection system for crops according to claim 1, **characterized in that** a helical shaft (14) has optionally been provided in the space established in each post (1), the rotation of which shaft, by means of a geared motor (15), establishes the movement of an upper espalier (16) which in its downward movement on the helical shaft (14), and in accordance with vertical spacers (17), establishes the drive in a downward direction of espaliers (18), between which there are arranged cables (19) as elements for supporting and guiding the crop (12).

6. The weather protection system for crops according to claim 1, **characterized in that** the rotation of the torsional tube (7) with which the cables (5) are integral, over one of which the protective sheet in which the two branches or flaps (9 and 10) are established is folded at the middle (8'), is operated by a geared motor (15), the rotation being established through a rotor (6).

7. The weather protection system for crops according to the previous claims, **characterized in that** the protective sheet in which the protection branches or flaps (9 and 10) are established is made indistinctly in plastic or textile material.

8. The weather protection system for crops according to the previous claims, **characterized in that** the sheet in which the protective branches or flaps (9 and 10) are established can have holes.

9. The weather protection system for crops according to the previous claims, **characterized in that** the rotor (6) for driving in the rolling/unrolling direction of the sheet forming the roll (8) in which the protection branches or flaps (9 and 10) are established can be operated manually or automatically through the geared motor (15).

10. The weather protection system for crops according to the previous claims, **characterized in that** the espaliers (16-18) can be operated manually or automatically by means of the geared motor (15).

11. The weather protection system for crops according to claim 10, **characterized in that** there is a main and upper espalier (16) operated manually or automatically by means of the geared motor (15), and several lower espaliers (18), separated from one another by means of separators (17), such that in the downward movement of the upper espalier (16) on the screw (14) it entails the downward movement of the espaliers (18) and therefore of the corresponding cables (19).

12. The weather protection system for crops according to the previous claims, **characterized in that** a parameterizable and remote management and operating system is optionally included for the automation in the general operation.
